# EUROPÄISCHE PATENTSCHRIFT

(11) **EP 3 619 344 B1**
(45) Veröffentlichungstag und Bekanntmachung des Hinweises auf die Patenterteilung: **02.08.2023**
(21) Anmeldenummer: 18764988.4
(22) Anmeldetag: 25.07.2018
(51) Int. Cl.: B01D 39/12, D03D 15/43, D03D 9/00

(54) **FILTERGEWEBE UND VERWENDUNG EINES FILTERGEWEBES**
FILTER FABRIC AND USE OF A FILTER FABRIC
TISSU FILTRANT ET UTILISATION D'UN TISSU FILTRANT

(30) Priorität: 31.07.2017 DE 102017007127
(43) Veröffentlichungstag der Anmeldung: 11.03.2020
(73) Patentinhaber: GKD - Gebr. Kufferath AG, 52353 Düren (DE)
(72) Erfinder: WIRTZ, Peter, 52353 Düren (DE); KNEFEL, Markus, 52353 Düren (DE); DRESCHERS, Daniel, 52511 Geilenkirchen (DE); HERPER, Dominik, 52353 Düren (DE); LÄPPCHEN, Christoph, 50321 Brühl (DE); HENSELER, Peter, 52396 Heimbach (DE)
(74) Vertreter: Castell, Klaus
(86) Internationale Anmeldenummer: PCT/DE2018/000224
(87) Internationale Veröffentlichungsnummer: WO 2019/024955

(56) Entgegenhaltungen:
- DD-A5- 288 983
- DE-A1- 2 531 752
- DE-C1- 4 302 031
- US-A- 4 945 952

## Beschreibung

Die Erfindung betrifft ein Filtergewebe mit parallel zueinander verlaufenden verkröpften Fäden, die abwechselnd um quer dazu verlaufende parallele gerade Fäden geführt sind, um ein Gewebe zu bilden.

Ein derartiges Filtergewebe ist als Drahtgewebe aus der DE 10 2009 044 740 A1 bekannt Dieses Gewebe ist dazu geeignet, bei gleich bleibender Durchflussrate die Filterteinheit zu verbessern, d.h. die Größen der auszufilternden Partikel sind verringert oder bei gleiohbleibender Filterfeinheit wird die Durchflussrate erhöht. Um die zwischen den Kett- und Schussdrähten liegenden Zwischenräume mit mehreren Poren zu versehen, umschlingen die Kettdrähte mit den größeren Längen bzw. den stärkeren Verformungen die Schussdrähte um 360° oder nahezu um 360°. Dabei kommt es zu Berührungen der in Reihen liegenden verformten Bereiche der Kettdrähte.

Tressengewebe, die beispielsweise aus der DE 25 31 752 A1, der DE 43 02 031 C1, der DD 288 983 A5 und der US 4 945 952 A bekannt sind, zeichnen sich dadurch aus, dass die Filterfeinheit durch die Größe des Zwickels zwischen parallel zueinander verlaufenden verkröpften Fäden und quer dazu verlaufenden parallelen gerade Fäden bestimmt wird. Ein Verstopfen eines derartigen Zwickels führt zum Verstopfen des Gewebes.

Ausgehend von diesem Stand der Technik liegt der Erfindung die Aufgabe zugrunde, ein Filtergewebe vorzustellen, bei dem durch die Variation der Kett- und Schussdrähte Durchflussrate und Filterfeinheit beliebig variiert werden können, ohne ein Verstopfen des Filters befürchten zu müssen.

Diese Aufgabe wird mit einem Filtergewebe gemäß des Anspruchs 1 gelöst.

Während im Stand der Technik die Kettdrähte die Schussdrähte so umschlingen, dass zwischen den verkröpften Kettdrähten keine Öffnungen mehr vorgesehen sind, werden erfindungsgemäß die verkröpften Fäden derart um die parallel verlaufenden geraden Fäden geführt, dass zwischen den verkröpften Fäden Öffnungen entstehen, durch die Partikel in das Gewebe eindringen können.

Die größere Dicke der geraden Fäden im Vergleich zur Dicke der verkröpften Fäden ermöglicht es, dass zwischen verkröpften Fäden Partikel ins Gewebe eindringen können und in Folge der Dicke des geraden Fadens der Ausgang aus dem Gewebe größer ist als der Eingang zwischen den verkröpften Fäden in das Gewerbe. Dies führt dazu, dass der sich aufweitende Querschnitt einen Sogeffekt bewirkt, der wie bei einer Venturidüse den Durchfluss positiv begünstigt.

Weiterhin sind erfindungsgemäß die geraden Fäden dicker als die verkröpften Fäden. Dies führt dazu, dass alle Öffnungen zwischen den verkröpften Fäden kleiner sind als die Öffnungen zwischen den verkröpften Fäden und den geraden Fäden. Der Abstand zwischen den verkröpften Fäden definiert somit die Feinheit des Filters und die Dicke der parallel verlaufenden geraden Fäden sichert eine hohe Durchflussrate durch das Filtermaterial.

Eine vorteilhafte Ausführungsvariante sieht vor, dass die geraden Fäden mehr als dreimal und vorzugsweise etwa viermal so dick sind wie der dünnste Faden der verkröpften Fäden. Die dünnen Fäden der verkröpften Fäden definieren somit weiterhin die Porosität und die weit dickeren geraden Fäden sichern einen besonders hohen Durchfluss.

Eine hohe Stabilität kann dadurch erzielt werden, dass bei den verkröpften Fäden sich ein dickerer Faden und ein dünnerer Faden abwechseln.

Als vorteilhafte Ausführungsvariante hat sich ein Filtergewebe herausgestellt, bei dem der dickere Faden der verkröpften Fäden etwa doppelt so dick ist wie der dünnere Faden der verkröpften Fäden.

Da der Durchfluss auch durch den Abstand der geraden Fäden beeinflusst wird, wird als vorteilhafte Ausführungsvariante vorgeschlagen, dass die geraden Fäden einen Abstand zueinander haben, der mindestens doppelt so lang ist wie der Durchmesser des dicksten verkröpften Fadens.

In Bezug auf den mittleren Durchmesser der geraden Fäden wird erfindungsgemäß vorgeschlagen, dass zwischen den geraden Fäden ein freier Abstand vorgesehen ist, der mindestens doppelt so lang ist wie der mittlere Durchmesser der geraden Fäden.

Eine spezielle Ausführungsform sieht vor, dass parallel zueinander verlaufende verkröpfte Fäden zumindest bereichsweise um mehrere quer dazu verlaufende parallele gerade Fäden geführt sind bevor sie um die oder den nächsten der geraden Fäden geführt sind. Somit können entweder auf einer Seite des Gewebes immer wieder mehr als ein gerader Faden umschlungen werden oder auch beidseitig des Gewebes.

Die Fäden des Filtergewebes können Drähte oder Fäden aus Metall oder Kunststoff sein. Diese können monofil oder multifil ausgebildet sein. Dabei können die gekröpften Fäden als Kette oder als Schuss gewebt sein.

Das Filtergewebe eignet sich insbesondere für besonders kleine Partikel. Dabei werden die maximalen Strömungsgeschwindigkeiten in den Gewebeöffnungen durch die besonders Webart drastisch reduziert, indem ankommende und auf das Gewebe auftretende Partikel nicht in das Gewebe eindringen, um es dort zu verstopfen und alle in das Gewebe eingedrungenen Partikel leicht wieder aus dem Gewebe herausgespült werden. Die schlitzförmigen Gewebeöffnungen lassen sich auch leicht rückspülen, da auch beim Rückspülvorgang viel Rückspülflüssigkeit in das Gewebe eindringen kann und die feineren Öffnungen des Gewebes eine Düsenfunktion bilden, um durch das Gewebe zurück gehaltene Partikel vom Gewebe zu lösen.

Ein vorteilhaftes Filtergewebe hat daher einen Kugeldurchlass zwischen 12 und 400 µm und insbesondere zwischen 30 und 300 µm oder zwischen 100 und 700 µm.

Besonders vorteilhafte Einsatzgebiete des Gewebes liegen daher in der Filtration von Gasen oder öl, wobei sich das Gewebe auch für andere gasförmige und flüssige Medien eignet.

Die Reduktion des Kugeldurchlasses auf Werte im Bereich zwischen 10 und 50 µm führt dazu, dass sich derartige Gewebe auch für die Wasserfiltration und insbesondere für die Filtration von Abwasser eignen. Dabei ist der sich aus der Gewebeart ergebende gute Durchfluss von besonderem Vorteil.

Eine vorteilhafte Ausführungsvariante ist in der Zeichnung dargestellt und wird im Folgenden näher beschrieben. Es zeigt
- Figur 1: eine simulierte Gewebebindung als dreidimensionale Abbildung und
- Figur 2: eine Draufsicht auf ein erfindungsgemäßes Gewebe mit Metalldrähten.

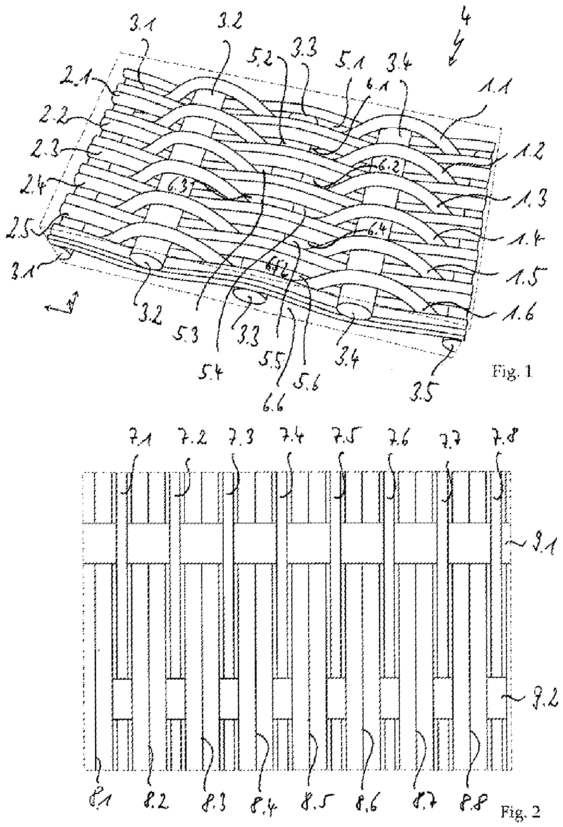

Das in Figur 1 gezeigte Filtergewebe hat parallel verlaufende verkröpfte dünne Fäden 1.1 bis 1.6. Zwischen diesen dünnen Fäden 1.1 bis 1.6 liegen gegenläufig verkröpfte dickere Fäden 2.1 bis 2.5. Die dünneren Fäden 1.1 bis 1.6 und die dickeren Fäden 2.1 bis 2.5 sind jeweils um besonders dicke parallel zueinander verlaufende gerade Fäden 3.1 bis 3.5 geschlungen. Dadurch entsteht ein Gewebe 4 mit Öffnungen 5.1 bis 5.6, die nur zwischen den verkröpften Fäden 1.1 bis 1.6 und 2.1 bis 2.6 gebildet sind.

Durch diese Öffnungen 5.1 bis 5.6 gelangt das zu filternde Medium in das Gewebe 4, um anschließend auf der gegenüberliegenden Seite des Gewebes durch versetzt dazu angeordnete Öffnungen 6.1 bis 6.6 das Gewebe wieder zu verlassen.

In diesem Ausführungsbeispiel sind die Fäden 2.1 bis 2.6 doppelt so dick wie die Fäden 1.1 bis 1.6 und die Fäden 3.1 bis 3.6 sind doppelt so dick wie die Fäden 2.1 bis 2.6.

Jede Fadenart kann dabei aus einem anderen Material bestehen und es können auch einzelne Fäden aus mehreren Materialien bestehen oder von mehreren Litzen, die nebeneinander liegen oder miteinander verwoben sein können, gebildet sein.

Die Figur 2 zeigt an einem Ausführungsbeispiel aus Metall wie zwischen den Metalldrähten 7.1 bis 7.8 jeweils Metalldrahtpaare 8.1 bis 8.8 angeordnet sind. Diese verkröpften Fäden 7.1 bis 8.8 sind um quer dazu verlaufende parallele gerade Drähte 9.1 und 9.2 verwebt. Dabei sind die Drähte 9.1 und 9.2 mindestens so dick wie der doppelte Durchmesser eines Drahtes der Metalldrahtpaare 8.1 bis 8.8.

Die Kennwerte eines erfindungsgemäßen Metallgewebes im Vergleich zu einem ähnlichen Gewebe aus dem Stand der Technik zeigt die folgende Tabelle:

| | Neues Gewebe | Stand der Technik. (GT 24×110) |
|---|---|---|
| Kugeldurchlass: | 150 µm | 150 µm |
| Flächengewicht: | 1,96 kg/m² | 2,50 kg/m² |
| Gewebedicke: | 0,93 mm | 0,74 mm |
| Luftdurchlässigkeit bei 127 Pa: | 712 CFM/ft² | 443 CFM/ft² |
| Luftdurohlässigkeit bei 200 Pa: | 4.670 l/m²/s | 2.980 l/m²/s |
| Porosität: | 73,5% | 58,0% |
| Dehngrenze R_{p0.2} in Kettrichtung: | 46,0 N/mm² | 43,5 N/mm² |
| Dehngrenze R_{p0.2} in Schussrichtung: | 42,6 N/mm² | 72,4 N/mm² |
| Maximale lineare Höchstzugkraft in Kettrichtung: | 112,1 N/mm | 69,0 N/mm |
| Maximale lineare Höchstzugkraft in Schussrichtung: | 89,5 N/mm | 123 N/mm |

## Patentansprüche

1. Filtergewebe mit parallel zueinander verlaufenden verkröpften Fäden (1.1 bis 1.6 und 2.1 bis 2.5), die abwechselnd um quer dazu verlaufende parallele gerade Fäden (3.1 bis 3.5) geführt sind, um ein Gewebe (4) zu bilden, die geraden Fäden (3.1 bis 3.5) dicker sind als die verkröpften Faden (1.1 bis 1.6 und 2.1 bis 2.5) und die verkröpften Fäden (1.1 bis 1.6 und 2.1 bis 2.5) derart um die parallel zueinander verlaufenden geraden Fäden (3.1 bis 3.5) geführt sind, dass zwischen den verkröpften Fäden Öffnungen (5.1 bis 5.6) entstehen, deren Breite durch Aneinanderliegen benachbarter verkröpfter Fäden definiert ist, wobei die Öffnungen nur zwischen den verkröpften Fäden (1.1 bis 1.6 und 2.1 bis 2.5) gebildet sind, durch die Partikel in das Gewebe eindringen können, ***dadurch gekennzeichnet, dass*** die geraden Fäden (3.1 bis 3.6) einen freien Abstand zwischen einander haben, der mindestens doppelt so lang ist wie der mittlere Durchmesser der geraden Fäden (3.1 bis 3.6), so dass alle in das Gewebe eingedrungenen Partikel leicht wieder aus dem Gewebe herausgespült werden.

2. Filtergewebe nach Anspruch 1, ***dadurch gekennzeichnet, dass*** die geraden Fäden (3.1 bis 3.5) mehr als drei Mal und vorzugsweise etwa vier Mal so dick sind wie der dünnste Faden (1.1 bis 1.6) der verkröpften Fäden (1.1 bis 1.6 und 2.1 bis 2.5).

3. Filtergewebe nach einem der vorhergehenden Ansprüche, ***dadurch gekennzeichnet, dass*** bei den verkröpften Fäden (1.1 bis 1.6 und 2.1 bis 2.6) sich ein dickerer Faden (2.1 bis 2.6) und ein dünnerer Faden (1.1 bis 1.6) abwechseln.

4. Filtergewebe nach Anspruch 3 ***dadurch gekennzeichnet, dass*** der dickere Faden (2.1 bis 2.5) etwa doppelt so dick ist wie der dünnere Faden (1.1 bis 1.6).

5. Filtergewebe nach einem der vorhergehenden Ansprüche, ***dadurch gekennzeichnet, dass*** die geraden Fäden (3.1 bis 3.6) einen freien Abstand zwischen einander haben, der mindestens doppelt so lang ist wie der Durchmesser des dicksten verkröpften Fadens (2.1 bis 2.6).

6. Filtergewebe nach einem der vorhergehenden Ansprüche, ***dadurch gekennzeichnet, dass*** parallel zueinander verlaufende verkröpfte Fäden (1.1 bis 1.6 und 2.1 bis 2.5) zumindest bereichsweise um mehrere quer dazu verlaufende parallele gerade Fäden (3.1 bis 3.6) geführt sind bevor sie um die oder den nächsten der geraden Fäden (3.1 bis 3.6) geführt sind.

7. Filtergewebe nach einem der vorhergehenden Ansprüche, ***dadurch gekennzeichnet, dass*** die Fäden (1.1 bis 1.6, 2.1 bis 2.5, 3.1 bis 3.6) aus unterschiedlichen Materialien hergestellt sind.

8. Filtergewebe nach einem der vorhergehenden Ansprüche, ***dadurch gekennzeichnet, dass*** der Kugeldurchlass zwischen 20 und 400 µm, insbesondere zwischen 30 und 300 µm, liegt.

9. Verwendung eines Filtergewebes nach einem der vorhergehenden Ansprüche zur Filtration von Abwasser.

10. Verwendung eines Filtergewebes nach einem der Ansprüche 1 bis 8 zur Filtration von Gasen.

11. Verwendung eines Filtergewebes nach einem der Ansprüche 1 bis 8 zur Filtration von Öl.

## Claims

1. A filter fabric with offset threads (1.1 to 1.6 and 2.1 to 2.5) running parallel to one another, which are guided alternately around parallel straight threads (3.1 to 3.5) running transversely thereto in order to form a fabric (4), the straight threads (3.1 to 3.5) are thicker than the offset threads (1.1 to 1.6 and 2.1 to 2.5) and the offset threads (1.1 to 1.6 and 2.1 to 2.5) are guided around the straight threads (3.1 to 3.5) running parallel to one another in such a manner that openings (5.1 to 5.6) are formed between the offset threads, whose width is defined by adjacent offset threads adjoining one another, wherein the openings are only formed between the offset threads (1.1 to 1.6 and 2.1 to 2.5) through which particles can penetrate into the fabric, ***characterized in that*** the straight threads (3.1 to 3.6) have a free distance between one another which is at least twice as long as the average diameter of the straight threads (3.1 to 3.6) so that all the particles that have penetrated into the fabric can easily be rinsed out of the fabric again.

2. The filter fabric according to Claim 1, ***characterized in that*** the straight threads (3.1 to 3.5) are more than three times and preferably about four times as thick as the thinnest threads (1.1 to 1.6) of the offset threads (1.1 to 1.6 and 2.1 to 2.5).

3. The filter fabric according to one of the preceding claims, ***characterized in that*** in the offset threads (1.1 to 1.6 and 2.1 to 2.6) a thicker thread (2.1 to 2.6) and a thinner thread (1.1 to 1.6) alternate.

4. The filter fabric according to Claim 3, ***characterized in that*** the thicker thread (2.1 to 2.5) is approximately twice as thick as the thinner thread (1.1 to 1.6).

5. The filter fabric according to one of the preceding claims, ***characterized in that*** the straight threads (3.1 to 3.6) have a free distance between one another which is at least twice as long as the diameter of the thickest offset thread (2.1 to 2.6).

6. The filter fabric according to one of the preceding claims, ***characterized in that*** offset threads (1.1 to 1.6 and 2.1 to 2.5) running parallel to one another are guided, at least in some regions, around a plurality of parallel straight threads (3.1 to 3.6) running transversely thereto before they are guided around the or the next one of the straight threads (3.1 to 3.6).

7. The filter fabric according to one of the preceding claims, ***characterized in that*** the threads (1.1 to 1.6, 2.1 to 2.5, 3.1 to 3.6) are made of different materials.

8. The filter fabric according to one of the preceding claims, ***characterized in that*** the ball passage is between 20 and 400 µm, in particular between 30 and 300 µm.

9. Use of a filter fabric according to one of the preceding claims for the filtration of waste water.

10. Use of a filter fabric according to one of the Claims 1 to 8 for the filtration of gases.

11. Use of a filter fabric according to one of Claims 1 to 8 for the filtration of oil.

## Revendications

1. Tissu filtrant avec des fils coudés passant parallèlement les uns par rapport aux autres (1.1 à 1.6 et 2.1 à 2.5), qui sont passés alternativement autour de fils (3.1 à 3.5) droits parallèles passant transversalement à ceux-ci pour former un tissu (4), les fils droits (3.1 à 3.5) sont plus épais que les fils coudés (1.1 à 1.6 et 2.1 à 2.5) et les fils coudés (1.1 à 1.6 et 2.1 à 2.5) sont guidés autour des fils droits passant parallèlement les uns par rapport aux autres (3.1 à 3.5) de telle manière que des ouvertures (5.1 à 5.6) sont créées entre les fils coudés dont la largeur est définie par la disposition côté à côté des fils coudés voisins, sachant que les ouvertures ne sont formées qu'entre les fils coudés (1.1 à 1.6 et 2.1 à 2.5), à travers lesquelles des particules peuvent pénétrer dans le tissu, ***caractérisé en ce que*** les fils droits (3.1 à 3.6) possèdent une distance libre entre eux, qui est le double en longueur du diamètre moyen des fils droits (3.1 à 3.6) de telle sorte que toutes les particules pénétrées dans le tissu sont facilement à nouveau expulsées du tissu.

2. Tissu filtrant selon la revendication 1, ***caractérisé en ce que*** les fils droits (3.1 à 3.5) sont plus de trois fois et de préférence environ quatre fois aussi épais que le fil le plus mince (1.1 à 1.6) des fils coudés (1.1 à 1.6 et 2.1 à 2.5).

3. Tissu filtrant selon l'une quelconque des revendications précédentes, ***caractérisé en ce qu'***un fil plus épais (2.1 à 2.6) et un fil plus mince (1.1 à 1.6) alternent en ce qui concerne les fils coudés (1.1 à 1.6 et 2.1 à 2.6).

4. Tissu filtrant selon la revendication 3, ***caractérisé en ce que*** le fil plus épais (2.1 à 2.5) est environ deux fois aussi épais que le fil plus mince (1.1 à 1.6).

5. Tissu filtrant selon l'une quelconque des revendications précédentes, ***caractérisé en ce que*** les fils doits (3.1 à 3.6) ont une distance libre entre eux, qui est le double en longueur du diamètre du fil coudé le plus épais (2.1 à 2.6).

6. Tissu filtrant selon l'une quelconque des revendications précédentes, ***caractérisé en ce que*** les fils coudés passant parallèlement les uns par rapport aux autres (1.1 à 1.6 et 2.1 à 2.5) sont passés au moins par endroits autour de plusieurs fils droits parallèles passant transversalement à ceux-ci (3.1 à 3.6) avant qu'ils ne soient passés autour du ou des fils suivants des fils droits (3.1 à 3.6).

7. Tissu filtrant selon l'une quelconque des revendications précédentes, ***caractérisé en ce que*** les fils (1.1 à 1.6, 2.1 à 2.5, 3.1 à 3.6) sont fabriqués dans des matériaux différents.

8. Tissu filtrant selon l'une quelconque des revendications précédentes, ***caractérisé en ce que*** le passage sphérique se situe entre 20 et 400 µm, en particulier entre 30 et 300 µm.

9. Utilisation d'un tissu filtrant selon l'une quelconque des revendications précédentes pour la filtration des eaux usées.

10. Utilisation d'un tissu filtrant selon l'une quelconque des revendications 1 à 8 pour la filtration de gaz.

11. Utilisation d'un tissu filtrant selon l'une quelconque des revendications 1 à 8 pour la filtration d'huile.
